# EUROPEAN PATENT SPECIFICATION

(11) **EP 1 338 192 B1**
(45) Date of publication and mention of the grant of the patent: **15.10.2008**
(21) Application number: 03075509.4
(22) Date of filing: 20.02.2003
(51) Int. Cl.: A01G 9/14

(54) **Pushing apparatus for potted plants**
Schubvorrichtung für Topfpflanzen
Dispositif pousseur pour plantes en pots

(30) Priority: 20.02.2002 NL 1020012
(43) Date of publication of application: 27.08.2003
(73) Proprietor: Visser 's-Gravendeel Holding B.V., 3295 KH 's-Gravendeel (NL)
(72) Inventor: Visser, Anthony, 3295 CT 's-Gravendeel (NL)
(74) Representative: Eveleens Maarse, Pieter

(56) References cited:
- BE-A- 833 994
- DE-A- 19 803 143
- NL-C- 1 009 628
- US-A- 5 882 174

## Description

The invention relates to the displacing of a number of objects from a first group of carriers placed one above another to a second group of carriers placed one above another.

Such situations occur when products have passed through a production process on carriers, and the products in question have to be moved from the carriers to other types of carrier, for instance for transport on the other types of carrier.

Such a situation likewise occurs for instance when the products are collected on first carriers, for instance potted plants or trays with young plants on pot or tray carriers, in the form of shelves or boards on which the potted plants or the trays are collected.

It is of course possible to place the products from the one carrier by hand onto the other. Particularly in the case of large production volumes this will however be less attractive, both in respect of the monotony of the work and in respect of the costs involved.

An apparatus according to the preamble of claim 1 is known from BE-A-833 994.

The object of the invention is to provide such an apparatus which can perform these operations.

This objective is achieved with such an apparatus which comprises a trolley which is movable in horizontal direction and which is provided with a number of pushing elements, each movable in horizontal direction above one of the carriers.

With these measures it is possible to transport a large number of objects from the one group of carriers to a following group of carriers within a very short time. This saves a great deal of human labour, while the process can take place at a very high speed.

The invention is intended in the first instance for situations in which each of the carriers of the first group is placed at the same horizontal level as a carrier of the second group.

The sliding of the displacing objects caused by the pushing of the pushing elements then takes place most easily.

In some situations however, where for instance the vertical pitch of the carriers must be as small as possible to make the best possible use of the available transport capacity, use is made of carriers arranged at different heights.

It is attractive in such situations to make use of guide plates arranged between the mutually connecting carriers.

When the height difference between each of the carriers belonging to the first group and the carrier connecting thereto and belonging to the second group is smaller than the height of the pushing plane of the objects, the guide plates will extend obliquely so as to connect onto the carriers. It is then possible to suffice with one series of pushing elements.

When the height difference is greater, use can be made of horizontally extending guide plates which are movable in the height between the level of the carriers of the first group and the carriers of the second group. It is hereby possible in a first position of the guide plates to slide the objects of the first group of carriers onto the guide plates, to move the guide plates upward or downward depending on the position of the second group of carriers and, when the guide plates have arrived at the level of the second group of carriers, to push the objects from the guide plate to the second group of carriers.

For this second pushing movement use can be made of the pushing elements used for the first pushing movement when the height differences permit, but use can also be made of these pushing elements when they are height-adjustable.

It is otherwise also possible to use a second trolley with pushing elements for the purpose of pushing the objects from the guide plates to the second group of carriers.

According to another preferred embodiment, the trolley is movable along guides extending above the level of the uppermost carriers.

This measure has the result that the construction allows complete freedom for arranging provisions for the placing of the carriers. It is thus possible to supply the carriers on a trolley, for instance in the form of a so-called Danish trolley or cart, and wherein the other group of carriers, which are formed for instance by stackable carriers, can be placed on a roller track or in other manner. The placing of a roller track for receiving the stack of carriers or moving into a trolley is thus in no way impeded by the pushing elements or the provisions connected thereto.

It is of course possible to fix such a construction to already available structural elements, for instance in a factory, although it is also possible for the guides to rest on the ground by means of supports arranged on either side of the guides. A stand-alone apparatus is hereby obtained.

According to yet another attractive preferred embodiment, the trolley comprises a vertically extending frame connected on its top side to a horizontally extending frame, and wherein the pushing elements are connected to the vertical frame.

The presence of a vertical frame provides the option of fixing pushing elements at different levels to the trolley, while the horizontal frame provides for the guiding along the guides. It is pointed out here that by exerting the pushing force the trolley is subjected to a large torque which must be absorbed by the guides. In order to be able to properly absorb the forces resulting herefrom, it is important to make use of a horizontal frame with sufficient dimensions to be able to transfer the torque with reasonable forces onto the guide.

Other attractive preferred embodiments are stated in the remaining sub-claims.

The present invention will be elucidated herein below with reference to the annexed drawings, in which:

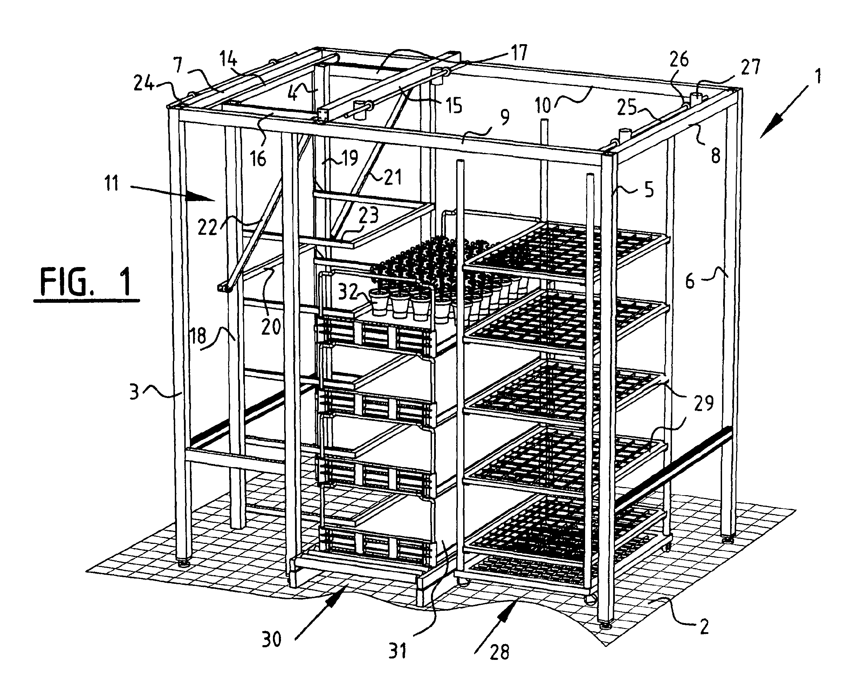

figure 1 shows a perspective view of an apparatus according to the invention for performing a pushing operation;

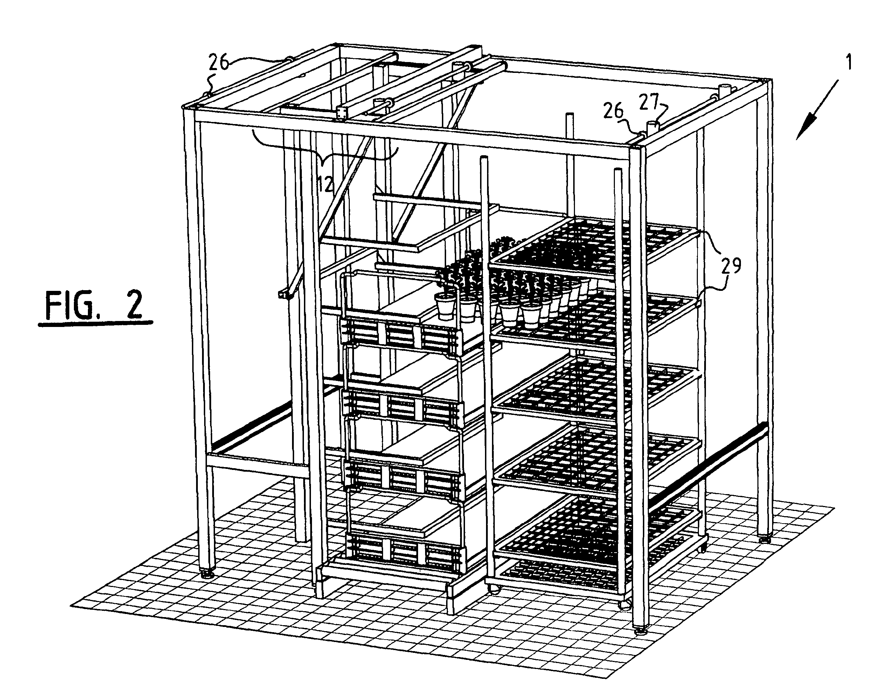

figure 2 shows a view corresponding with figure 1 during performing of a pushing operation; and
figure 3 shows a sectional view of a specific embodiment of the apparatus.

Shown in the figures is an apparatus according to the invention which is designated as a whole with 1 and which is placed on a ground 2. The apparatus is formed by four uprights 3, 4, 5 and 6, which are manufactured for instance from aluminium profiles. Uprights 3, 4 are mutually connected by means of a horizontal profile 7, while uprights 5, 6 are mutually connected by means of a horizontal profile 8.

In addition, the pairs of uprights 3 and 5 respectively 4 and 6 are mutually connected by two guides 9 respectively 10. The guides are likewise manufactured from aluminium profiles and are provided on their side directed toward each other with a groove, inside which a body can slide.

A trolley designated as a whole with 11 is movable inside the thus formed frame. Trolley 11 is formed essentially by a horizontal frame 12 and a vertical frame. The horizontal frame comprises two transverse rods 14 respectively 15 which are each provided on both ends with guide wheels for guiding the transverse rods 14, 15 inside the guides 9, 10. Both transverse rods 14, 15 are mutually connected by two bars 16 respectively 17.

The transverse rod 14 also forms part of the vertical frame 13 which is further provided with two uprights 18, 19. The two uprights are further connected by a transverse rod 20. In order to strengthen the construction and to transfer the torque for driving the pushers still to be described, two shores 21, 22 are arranged which connect transverse rod 20 to transverse rod 15.

Pushers 23 are arranged on uprights 18, 19. These pushers are formed by U-shaped frames which are preferably also manufactured from aluminium profiles and which are arranged slidably along uprights 18, 19. Furthermore, these pushers are arranged removably so that the height and the number of pushers can be adjusted to the height and the number of carriers whose load must be displaced.

Two shafts 24 respectively 25 are arranged in order to drive the trolley 11. Two sprockets 26 are placed on each of the shafts. Around each pair of sprockets 26 lying in the same plane is trained a chain which is connected at both ends to trolley 12. The trolley 11 is moved along the guides by driving the shaft 25 by means of the motors 27 coupled thereto. As the trolley moves, the pushers 23 will also be moved. It is also possible to apply other types of drive.

Although this apparatus can be used to push loose objects from the one stack of carriers to the subsequent stack of carriers, there is a great freedom of choice in the types of carrier.

The figure thus shows as receiving series of carriers a so-called Danish trolley 28, this being a frame with sub-frame, wherein a further coupling rod is connected pivotally to the first sub-frame and to the third sub-frame such that using the pivoting device the third sub-frame can be pivoted out of the operating position, in which it is arranged transversely of the operating direction of the machine and adjacently of the first sub-frame, into the transporting position in which it is arranged via the first sub-frame and roughly parallel thereto, and wherein using the pivoting device the coupling rod can be pivoted relative to the first sub-frame and, separately thereof, the third sub-frame can be pivoted relative to the coupling rod. The Danish trolley 28 is provided with a number of platforms 29 which are still empty when trolley 28 is supplied. In the embodiment shown in the drawing there is further a roller track 30 on which potted plant carriers 31 are placed.

In the preferred embodiment the vertical distance between the top side of carriers 31 is equal to the vertical distance between the carriers 29 of Danish trolley 28. Carriers 29 and 31 are herein always placed at the same height. Potted plants 32 are present on the uppermost carrier 31. Although only the uppermost carrier 31 is shown filled with potted plants, the carriers below are also filled with potted plants. By causing trolley 11 to move by means of driving the motors 27, it is possible to move all potted plants simultaneously from carriers 31 to carriers 29 of trolley 28.

A great saving of time and manpower is hereby achieved.

During transport of the plants it is of the greatest importance that the products or plants are transported at the highest possible density so as to keep transport costs as low as possible. The Danish trolleys or carts are provided with height-adjustable carriers so that the carriers can be set to the optimal height for the transport of the products. The height of the carriers in which the products are supplied will then not usually correspond with the height of the carriers in the Danish trolley which are optimally placed for transport.

A specific embodiment provides the option of applying the apparatus according to the invention in such a situation.

This is possible without problem if the pushing elements are effective on both types of carrier, so when the height difference between each of the carriers belonging to the first group and the carrier belonging to the second group and connecting thereto is smaller than the height of the pushing plane of the objects. The carriers must further be placed directly against each other, and the carriers to which the products are being moved must be placed lower than the carriers on which the products are being supplied.

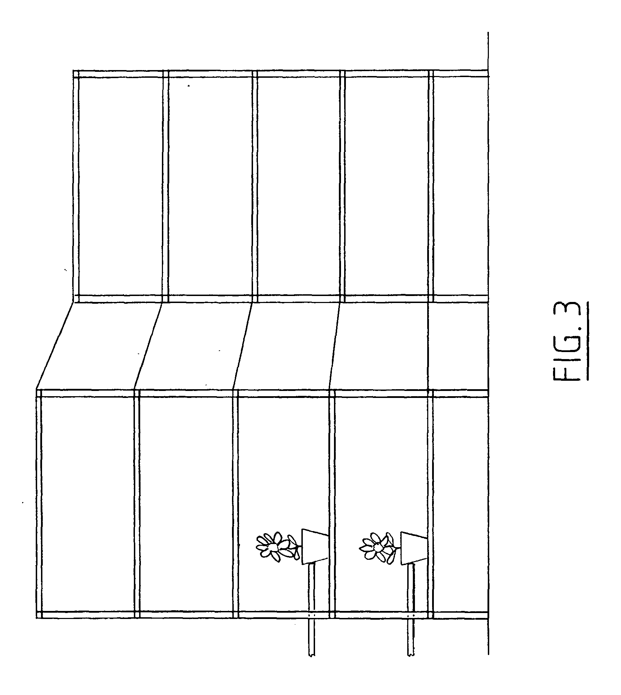

When the "receiving" carriers are placed higher, transition plates must be applied as shown in figure 3. Transition plates can also be applied in a situation where the "receiving" carriers are placed lower, so as to avoid falling or tipping over of the objects for sliding.

As already indicated above, it is possible to make diverse modifications to the construction shown here.

## Claims

1. Apparatus for displacing a number of objects from a first group of carriers (31) placed one above another to a second group of the same number of carriers (29) placed one above another, **characterized in that** the apparatus comprises a trolley (11) which is movable in horizontal direction and which is provided with a number of pushing elements (23), each movable in horizontal direction above one of the carriers.

2. Apparatus as claimed in claim 1, **characterized in that** each of the carriers of the second group is placed at the same horizontal level as a carrier of the first group.

3. Apparatus as claimed in claim 1, **characterized in that** the at least one carrier of the first group is placed at a different level than a carrier connecting thereto of the second group, and that guide plates are arranged between the mutually connecting carriers.

4. Apparatus as claimed in claim 3, **characterized in that** the height difference between each of the carriers belonging to the first group and the carriers connecting thereto and belonging to the second group is smaller than the height of the pushing plane of the objects.

5. Apparatus as claimed in claim 3, **characterized in that** the guide plates extend horizontally and that they are movable in the height between the level of the carriers of the first group and the carriers of the second group.

6. Apparatus as claimed in claim 5, **characterized in that** the pushing elements are height-adjustable.

7. Apparatus as claimed in claim 5, **characterized in that** the apparatus comprises a second trolley with pushing elements for the purpose of pushing the objects for displacing from the guide plates to the second group of carriers.

8. Apparatus as claimed in any of the foregoing claims, **characterized in that** the at least one trolley is movable along guides extending above the level of the uppermost carriers.

9. Apparatus as claimed in claim 8, **characterized in that** the guides rest on the ground by means of supports arranged on either side of the guides.

10. Apparatus as claimed in claim 8 or 9, **characterized in that** the trolley comprises a vertically extending frame connected on its top side to a horizontally extending frame, and that the pushing elements are connected to the vertical frame.

11. Apparatus as claimed in claim 10, **characterized in that** the pushing elements are connected to the vertical frame for sliding in vertical direction.

12. Apparatus as claimed in claim 10 or 11, **characterized in that** the pushing elements are releasably connected to the vertical frame.

13. Apparatus as claimed in claim 10, 11 or 12, **characterized in that** the vertical frame is connected to the horizontal frame by two shores extending on either side of the carriers.

14. Apparatus as claimed in any of the foregoing claims, **characterized in that** the apparatus comprises support elements for at least one of the groups of carriers.

15. Apparatus as claimed in any of the claims 1-13, **characterized in that** the apparatus comprises a roller track for supplying the stacks of carriers.

16. Apparatus as claimed in any of the foregoing claims, **characterized in that** the apparatus is suitable for pushing potted plants from the first series of carriers to the second series of carriers.

## Patentansprüche

1. Vorrichtung zum Versetzen einer Anzahl von Objekten von einer ersten Gruppe von Tragbehältern (31), welche übereinander angeordnet sind, zu einer zweiten Gruppe der gleichen Anzahl von Tragbehältern (29), welche übereinander angeordnet sind, **dadurch gekennzeichnet, dass** die Vorrichtung einen Förderwagen (11) aufweist, der in horizontaler Richtung bewegbar ist und der mit einer Anzahl von Schubelementen (23) versehen ist, wobei jedes in horizontaler Richtung über einem der Tragbehälter bewegbar ist.

2. Vorrichtung nach Anspruch 1, **dadurch gekennzeichnet, dass** jeder der Tragbehälter der zweiten Gruppe in der gleichen horizontalen Ebene wie ein Tragbehälter der ersten Gruppe angeordnet ist.

3. Vorrichtung nach Anspruch 1, **dadurch gekennzeichnet, dass** der zumindest eine Tragbehälter der ersten Gruppe in einer anderen Ebene als ein Tragbehälter, der mit der zweiten Gruppe verbunden ist, angeordnet ist, und dass Führungsplatten zwischen den gegenseitig-verbindenden Tragbehältern angeordnet sind.

4. Vorrichtung nach Anspruch 3, **dadurch gekennzeichnet, dass** die Höhendifferenz zwischen jedem der Tragbehälter, die zur ersten Gruppe gehören, und den Tragbehältern, die damit verbunden sind und welche zur zweiten Gruppe gehören, kleiner ist als die Höhe der Schubebene der Objekte.

5. Vorrichtung nach Anspruch 3, **dadurch gekennzeichnet, dass** die Führungsplatten sich horizontal erstrecken und dass sie in der Höhe zwischen der Ebene der Tragbehälter der ersten Gruppe und den Tragbehältern der zweiten Gruppe bewegbar sind.

6. Vorrichtung nach Anspruch 5, **dadurch gekennzeichnet, dass** die Schubelemente höhen-einstellbar sind.

7. Vorrichtung nach Anspruch 5, **dadurch gekennzeichnet, dass** die Vorrichtung einen zweiten Förderwagen mit Schubelementen aufweist, für den Zweck, die Objekte zu verschieben, um sie von den Führungsplatten zur zweiten Gruppe der Tragbehälter zu versetzen.

8. Vorrichtung nach einem der vorhergehenden Ansprüche, **dadurch gekennzeichnet, dass** der zumindest eine Förderwagen längs Führungen bewegbar ist, welche sich über die Ebene der obersten Tragbehälter erstrecken.

9. Vorrichtung nach Anspruch 8, **dadurch gekennzeichnet, dass** die Führungen auf dem Boden mittels Lagern ruhen, welche auf jeder Seite der Führungen angeordnet sind.

10. Vorrichtung nach Anspruch 8 oder 9, **dadurch gekennzeichnet, dass** der Förderwagen einen vertikal sich erstreckenden Rahmen aufweist, der auf seiner oberen Seite mit einem horizontal sich erstreckenden Rahmen verbunden ist, und dass die Schubelemente mit dem vertikalen Rahmen verbunden sind.

11. Vorrichtung nach Anspruch 10, **dadurch gekennzeichnet, dass** die Schubelemente mit dem vertikalen Rahmen verbunden sind, um in vertikaler Richtung zu gleiten.

12. Vorrichtung nach Anspruch 10 oder 11, **dadurch gekennzeichnet, dass** die Schubelemente mit dem vertikalen Rahmen lösbar verbunden sind.

13. Vorrichtung nach Anspruch 10, 11 oder 12, **dadurch gekennzeichnet, dass** der vertikale Rahmen mit dem horizontalen Rahmen über zwei Streben verbunden ist, welche sich auf jeder Seite der Tragbehälter erstrecken.

14. Vorrichtung nach einem der vorhergehenden Ansprüche, **dadurch gekennzeichnet, dass** die Vorrichtung Lagerelemente für zumindest eine der Gruppen der Tragbehälter aufweist.

15. Vorrichtung nach einem der Ansprüche 1-13, **dadurch gekennzeichnet, dass** die Vorrichtung eine Rollschiene zum Zuführen der Tragbehälterstapel aufweist.

16. Vorrichtung nach einem der vorhergehenden Ansprüche, **dadurch gekennzeichnet, dass** die Vorrichtung geeignet ist, Topfpflanzen von der ersten Reihe der Tragbehälter zur zweiten Reihe der Tragbehälter zu verschieben.

## Revendications

1. Appareil pour déplacer un certain nombre d'objets d'un premier groupe de supports (31) placés les uns au-dessus des autres jusqu'à un second groupe du même nombre de supports (29) placés les uns au-dessus des autres, **caractérisé en ce que** l'appareil comprend un chariot (11) qui est mobile dans la direction horizontale et qui est prévu avec un certain nombre d'éléments pousseurs (23), chacun mobile dans la direction horizontale au-dessus de l'un des supports.

2. Appareil selon la revendication 1, **caractérisé en ce que** chacun des supports du second groupe est placé au même niveau horizontal qu'un support du premier groupe.

3. Appareil selon la revendication 1, **caractérisé en ce que** le au moins un support du premier groupe est placé à un niveau différent d'un support le raccordant au second groupe, et **en ce que** des plaques de guidage sont agencées entre des supports se raccordant mutuellement.

4. Appareil selon la revendication 3, **caractérisé en ce que** la différence de hauteur entre chacun des supports appartenant au premier groupe et des supports raccordés à ceux-ci et appartenant au second groupe est plus petite que la hauteur du plan de poussée des objets.

5. Appareil selon la revendication 3, **caractérisé en ce que** les plaques de guidage s'étendent horizontalement et **en ce qu'**elles sont mobiles en hauteur entre le niveau des supports du premier groupe et les supports du second groupe.

6. Appareil selon la revendication 5, **caractérisé en ce que** les éléments pousseurs sont réglables en hauteur.

7. Appareil selon la revendication 5, **caractérisé en ce que** l'appareil comprend un second chariot avec des éléments de poussée afin de pousser les objets pour déplacer depuis les plaques de guidage jusqu'au second groupe de supports.

8. Appareil selon l'une quelconque des revendications précédentes, **caractérisé en ce que** le au moins un chariot est mobile le long de guides s'étendant au-dessus du niveau des supports les plus hauts.

9. Appareil selon la revendication 8, **caractérisé en ce que** les guides reposent sur le sol au moyen de supports agencés de chaque côté des guides.

10. Appareil selon la revendication 8 ou 9, **caractérisé en ce que** le chariot comprend un châssis s'étendant verticalement raccordé sur son côté haut à un châssis s'étendant horizontalement, et **en ce que** les éléments pousseurs sont raccordés au châssis vertical.

11. Appareil selon la revendication 10, **caractérisé en ce que** les éléments pousseurs sont raccordés au châssis vertical pour coulisser dans la direction verticale.

12. Appareil selon la revendication 10 ou 11, **caractérisé en ce que** les éléments pousseurs sont raccordés de manière amovible au châssis vertical.

13. Appareil selon la revendication 10, 11 ou 12, **caractérisé en ce que** le châssis vertical est raccordé au châssis horizontal par deux étais s'étendant de chaque côté des supports.

14. Appareil selon l'une quelconque des revendications précédentes, **caractérisé en ce que** l'appareil comprend des éléments de support pour au moins l'un des groupes de supports.

15. Appareil selon l'une quelconque des revendications 1 à 13, **caractérisé en ce que** l'appareil comprend un rail de galet pour alimenter les piles de supports.

16. Appareil selon l'une quelconque des revendications précédentes, **caractérisé en ce que** l'appareil est approprié pour pousser des plantes en pot de la première série de supports à la seconde série de supports.
